# EUROPEAN PATENT SPECIFICATION

(11) **EP 4 150 233 B1**
(45) Date of publication and mention of the grant of the patent: **30.10.2024**
(21) Application number: 21730656.2
(22) Date of filing: 13.05.2021
(51) Int. Cl.: F16H 48/08, F16H 3/64, B60K 17/16, B60K 17/08, F16H 37/08, F16H 63/30

(54) **DIFFERENTIAL UNIT WITH DIFFERENT VELOCITIES**
DIFFERENTIALEINHEIT MIT VERSCHIEDENEN GESCHWINDIGKEITEN
UNITÉ DIFFÉRENTIELLE À VITESSES DIFFÉRENTES

(30) Priority: 13.05.2020 IT 202000010891
(43) Date of publication of application: 22.03.2023
(73) Proprietor: IVECO S.P.A., 10156 Torino (IT)
(72) Inventor: PEREIRA LEMOS, Jose Francivaldo, Sete Lagoas MG (BR)
(74) Representative: Studio Torta S.p.A.
(86) International application number: PCT/IB2021/054099
(87) International publication number: WO 2021/229491

(56) References cited:
- WO-A1-2017/176176
- GB-A- 587 312
- GB-A- 808 543
- JP-A- H10 227 339
- US-A- 2 053 929

## Description

### TECHNICAL FIELD

The invention relates to a differential unit, more in particular to a differential group for a heavy vehicle, such as a truck.

### KNOWN STATE OF THE ART

The differential is a power transmission member available in vehicles to distribute the torque coming from an input shaft to a pair of output shafts connected to respective wheels. In particular, as it is known, the differential allows different velocities to be delivered to the wheels, so as to allow each one of them to follow the relative trajectory during paths covering a bend or paths with different grips.

In its simplest configuration, a differential comprises a carrier, to which two shafts are constrained, and two satellites, which are placed on the shafts and mesh with two driven planetary gears, which are integral to the axle shafts, each connected to the respective wheel.

Known differentials are also provided with a locking function, which is configured to cause the two axle shafts to be integral to one another. This function is useful in case of a surface allowing for a reduced grip of the tyres, in which case one of the two wheels, if it were not constrained to the other one, would tend to skid, thus dispersing the torque.

Examples of known differential systems are disclosed in GB808543 A, US2053929 A, GB587312 A, JPH10227339 A or WO2017176176 A1.

However, known differentials are subjected to a constant need for improvements, so as to ensure a versatile use thereof and increase the functions thereof.

Therefore, existing vehicle differentials need to be improved.

The object of the invention is to fulfil the needs discussed above in an economic fashion.

### SUMMARY OF THE INVENTION

The aforesaid object is reached by a differential group comprising the combination of features of claim 1, the dependent claims show further advantageous embodiments of the invention.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows an axle comprising a differential group according to a first embodiment of the invention;
- Figure 2 shows a schematic sectional view, with parts removed for greater clarity, of a first embodiment of the differential group according to the invention in a first operating condition;

- Figure 3 shows a schematic sectional view, with parts removed for greater clarity, of the differential group of figure 2 in a second operating condition;
- Figures 4A and 4B show the differential group of figures 2 and 3, respectively, indicating, by means of arrows, the torque flow according to the invention in the two different operating conditions;
- Figure 5 shows an axle comprising a differential group according to a first example embodiment not according to the invention;
- Figure 6 shows a schematic sectional view, with parts removed for greater clarity, of the first example embodiment of the differential group in a first operating condition;
- Figure 7 shows a schematic sectional view, with parts removed for greater clarity, of the differential group of figure 6 in a second operating condition;
- Figures 8A and 8B show the differential group of figures 6 and 7, respectively, indicating, by means of arrows, the torque flow in the two different operating conditions;
- Figure 9 shows an axle comprising a differential group according to a second example embodiment not according to the invention;
- Figure 10 shows a schematic sectional view, with parts removed for greater clarity, of the second example embodiment of the differential group in a first operating condition;
- Figure 11 shows a schematic sectional view, with parts removed for greater clarity, of the differential group according of figure 10 in a second operating condition; and
- Figures 12A and 12B show the differential group of figures 10 and 11, respectively, indicating, by means of arrows, the torque flow in the two different operating conditions.

### DETAILED DESCRIPTION OF THE INVENTION

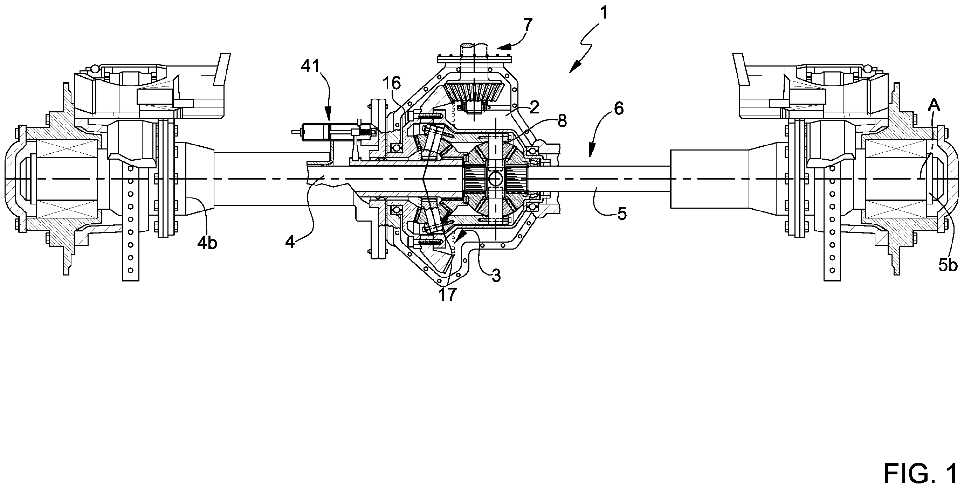

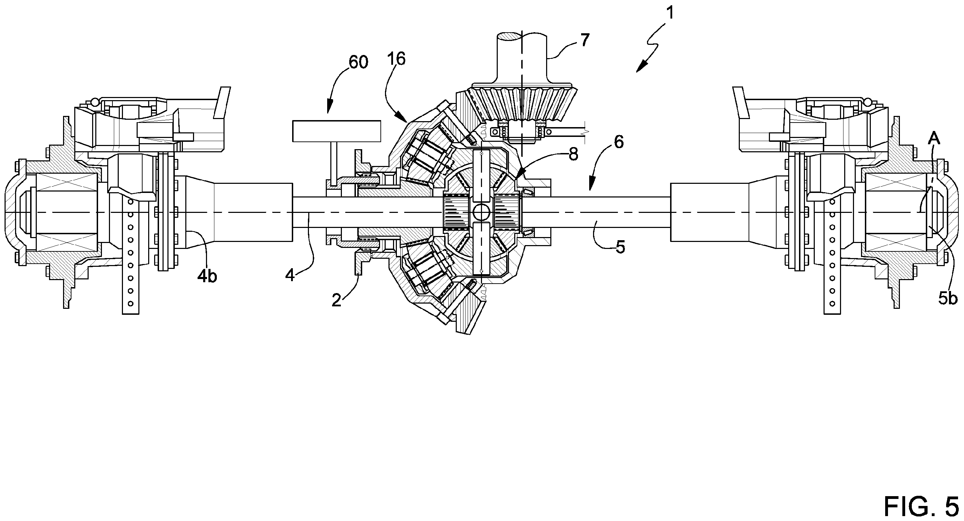

In the accompanying figures, number 1 indicates a differential group 1 according to the invention housed inside a casing 2 configured to delimit an inner space 3 suited for the purpose. The casing 2 further is advantageously configured to house part of the axle shafts 4, 5 of an axle 6, as shown in figure 1, 5 or 9. To this aim, the casing 2 can be manufactured as one single piece or in different parts depending on the assembling needs of the differential group 1 and of the axle 6.

The differential group 1 is operatively interposed between the axle shafts 4, 5 and a drive source 7, such as a transmission shaft configured to convey the torque of an internal combustion engine or an electric motor, which is configured to transmit a torque to the axle shafts 4, 5.

The axle shafts 4, 5, as it is known, are advantageously concentric to one another around a common longitudinal axis A, cooperate - with a respective inner end 4a, 5a - with the differential group 1 and define a wheel hub at outer ends 4b, 5b of theirs.

The differential group 1 comprises a differential 8 and a transmission 9, the differential 8 being operatively interposed between the axle shafts 4, 5 and the transmission 9 and the latter being operatively interposed between the differential 8 and the drive source 7.

The differential 8 is of a known type and comprises a carrier 11, which carries a plurality of satellites 13, for example four satellites, which are angularly equally spaced apart from one another by 90° and are supported by a cross-shaped support 14, which is rigidly carried by the carrier 11 and around whose arms the satellites 13 can rotate. In particular, the satellites rotate on the support 14 around axes contained in a plane, which is perpendicular to the axis A.

The satellites 13 cooperate with a planetary comprising a left bevel gear 15a and a right bevel gear 16b, respectively, which are rigidly carried by the axle shaft 4 and by the axle shaft 5, respectively, on the respective inner portion.

The transmission 9 basically comprises a rotating structure 16 and a planetary gear 17, which are operatively interposed between the drive source 7 and the carrier 11.

In particular, the rotating structure 16 is configured to define a closed space 18 suited to house the planetary 17 and the differential 8.

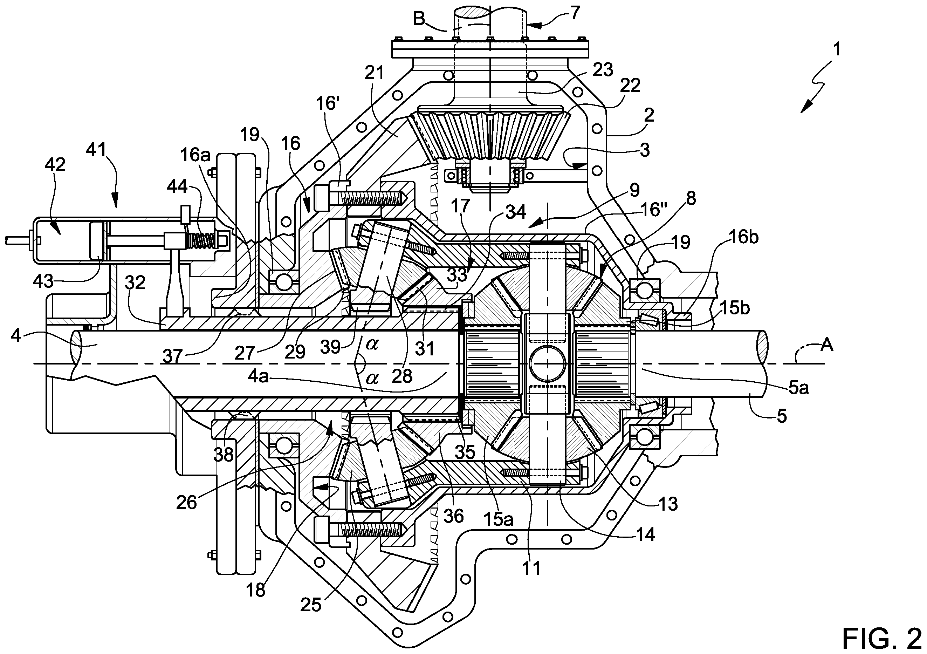

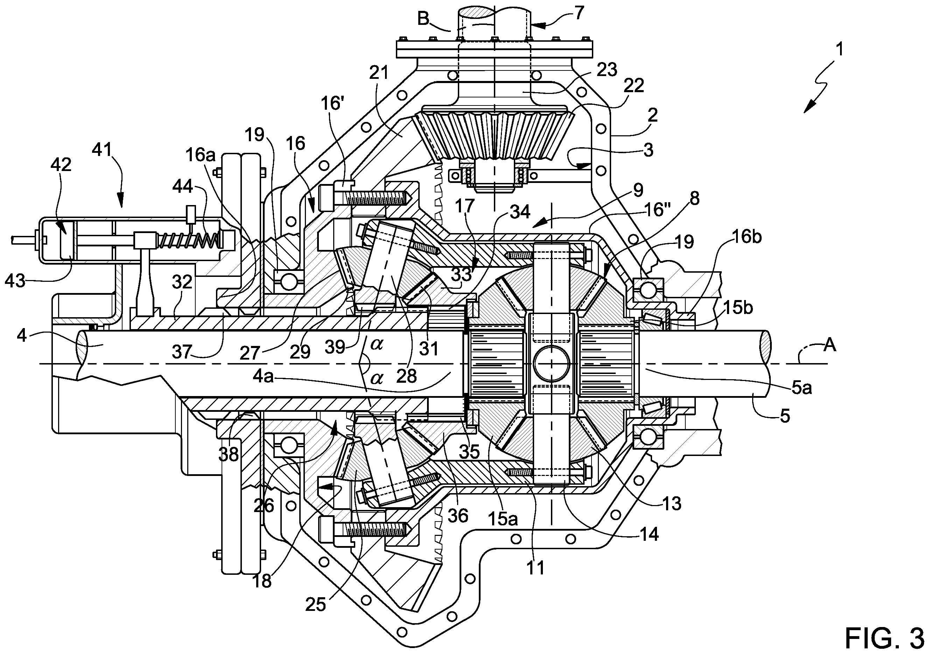

According to the embodiment shown in figures 2 and 3, the rotating structure 16 is coaxial to the axis A of the axle shafts 4, 5 and defines a first and a second opening 16a, 16b, which are configured to allow the inner ends 4a, 5a of the axle shafts 4, 5 to be inserted inside it.

The rotating structure 16 is supported in a rotary manner by the casing 2 by means of rotary supports 19, such as for example ball bearings. The rotating structure 16 is operatively connected to the drive source 7 by means of a toothed gear 21, which is rigidly carried by the rotating structure 16 and is configured to cooperate with the drive source 7 so as to allow a torque to be transmitted. In particular, in the embodiment described herein, the toothed gear 21 is a bevel gear configured to mesh with a respective bevel gear 22 carried by a shaft 23 rotating around an axis B, which is perpendicular to the axis A of the axle shafts 4, 5.

Preferably, the rotating structure 16 is manufactured in different portions, in particular a first portion 16' defining the first opening 16a and a second portion 16" defining the second opening 16b. The two portions 16', 16'' advantageously are rigidly connected to one another, for example through threaded means.

Preferably, the toothed gear 21 is manufactured as a separate piece relative to said portions 16', 16" and is rigidly connected to them. Advantageously, the toothed gear 21 is connected, in a clamped manner, between the two portions 16', 16'' and is fixed to them through the same threaded means connecting them.

The planetary 17 comprises a plurality of satellites 25, which are connected to the carrier 11 of the differential 8, a solar 26, which is housed around one of the axle shafts 4, 5, in the figures the left axle shaft 4, and a crown 27, which is rigidly carried by the rotating structure 16.

In particular, the satellites 25 are free to rotate around a pin 28 rigidly carried by the carrier 11, for example through threaded means, and, hence, cooperate with a toothing 29 defined by the crown 27 and with a toothing 31 defined by the solar 26. In particular, the pins 28 are arranged in an oblique manner relative to the axes A, B described above, advantageously inclined to define an acute angle α facing the differential 8.

The crown 27 is advantageously manufactured as one single piece together with the rotating structure 16 and, advantageously, is manufactured as one single piece together with the first portion 16', in particular it is defined by an axial projection inside the space 18, more preferably close to the opening 16a.

The solar 26 comprises a sleeve 32, which is housed around the axle shaft 4 and is free to move relative to the latter both in a rotary and in a sliding manner, and a return 33, which is coupled, in its rotation, to the sleeve 32 in an end portion of its.

In particular, the return 33 and the sleeve 32 are coupled to one another in a rotary manner, but are free from a sliding point of view, so that the sleeve 32 can move along the axis A relative to the return 33. More in detail, the return 33 and the sleeve 32 are coupled by means of a grooved coupling 34 obtained by means of a toothing 35 extending in a radial direction from the inside of the return 33 and a toothing 36 extending in a radial direction on the outside of the sleeve 32 in an end portion thereof.

The sleeve 32 further defines a further shape coupling, which can selectively be engaged with the rotating structure 16. In particular, it defines a further toothing 37 radially extending from its outer surface and arranged in an intermediate position between the two end portions of the sleeve as well as configured to selectively cooperate, in contact, with a toothing 38 carried by the casing 2. In particular, the toothing 38 radially extends from the casing 2 towards the axle shaft 4.

The sleeve 32 further defines a further shape coupling, which can selectively be engaged with the pins 28 supporting the satellites 25. In particular, it defines a toothing 39, which is obtained on an inner portion of the pins 25 facing the sleeve 32. In particular, the toothing 36 defining the grooved coupling 34 is sized so as to be able to selectively - and depending on the position of the sleeve 32 along the axis A - mesh with the toothing 39.

Consequently to the embodiment described above, the sleeve 32 is configured to move along the axis A so as to assume a first configuration (figure 2), in which the toothing 36 meshes with the sole toothing 35 of the coupling 34 and, at the same time, the toothing 37 meshes with the toothing 38, thus making the solar 26 integral to the casing 2. The sleeve 32 further defines a second configuration (figure 3), in which the toothing 36 meshes with the toothings 35 of the coupling 34 and 39 of the pins 28 and, at the same time, the toothing 37 does not mesh with the respective toothing 38.

The differential group 1 comprises actuator means 41, which are configured to allow the positioning of the sleeve 32 along the two positions mentioned above to be controlled.

In particular, the actuator means 41 are pneumatic actuator means and comprise a chamber 42, in which a piston 43 is free to slide in a sealing manner. The chamber 42 is fluidically connected to a source of air under pressure, so as to be selectively filled with or emptied from said air under pressure. The piston 43 is held in a rest position by elastic means 44, which are configured to exert, upon the piston, a force that is contrary to the one exerted by the pressure in the chamber 42 upon the piston 43 itself.

The latter, hence, can slide in a sealing manner in the chamber 42 depending on the force balance between the thrust provided by the elastic means 44 and the pressure of the air in the chamber 42 exerted on it.

The piston is further connected to the sleeve 32 so that, when there is no air inside the chamber 42, it holds the sleeve 32 in the position of figure 3, namely a position in which the rotating structure 16 and the solar 26 are free to rotate relative to one another, whereas, when there is air under pressure in the chamber 42, the thrust provided by the elastic means 44 acting upon the piston 43 is overcome, thus causing the latter to move, moving the sleeve 32 to the position of figure 2, namely a position in which the rotating structure 16 and the solar 26 are coupled to one another in a rotary manner.

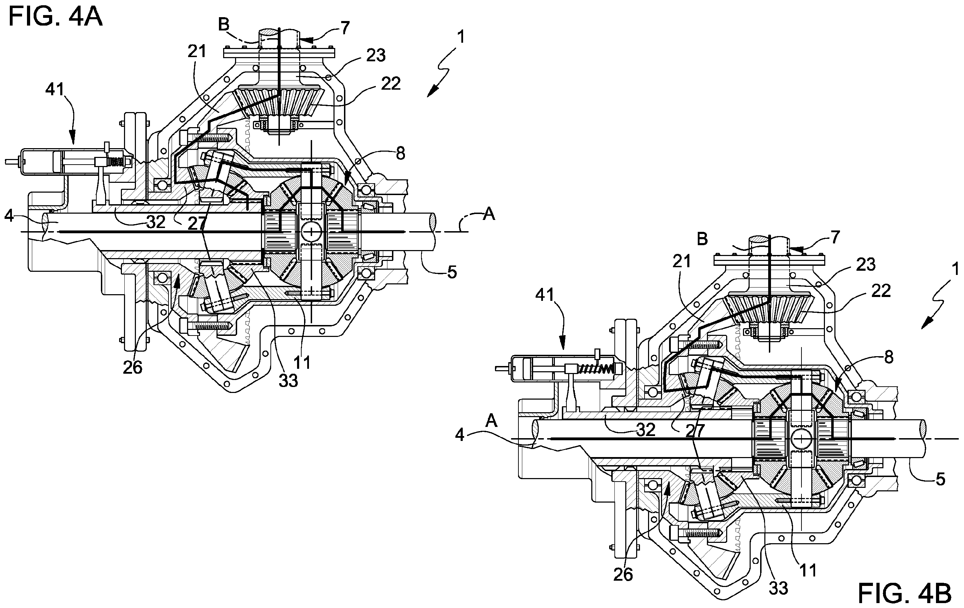

The way in which the embodiment of the differential group 1 described above operates is the following one and it will be described using figures 4A, 4B, which show the lines followed by the torque from the drive source 7 to the differential 8.

In the condition of figure 4A, the actuator means 41 are controlled so as to allow air to flow into the chamber 42. In this way, the force acting upon the piston 43 overcomes the retaining force of the elastic means 44 and pushes the sleeve 32 so that it places itself in the operating condition in which the toothing 35 meshes with the sole toothing 36 and, at the same time, the toothing 37 meshes with the toothing 38. In this condition, the torque coming from the drive source 7 is transmitted from the gearing consisting of the toothed gears 21, 22 to the rotating structure 16, in order to then reach the satellites 25, which rotate between the toothing 31 of the return 33, fixed relative to the casing 2, and the toothing 29 of the crown 27 and transmit said torque to the carrier 11, to which they are rigidly connected. The latter splits the torque between the axle shafts 4, 5 in a known manner.

In the condition of figure 4B, the actuator means 41 are controlled so as to allow air to flow out of the chamber 42 (if present) or are at rest. In this way, the retaining force of the elastic means 44 holds the sleeve 32 in the operating condition in which the toothing 35 meshes both with the toothing 36 and with the toothing 39 and, at the same time, the toothing 37 does not mesh with the toothing 38. In this condition, the torque coming from the drive source 7 is transmitted from the gearing consisting of the toothed gears 21, 22 to the rotating structure 16 and, at the same time, to the satellites 25 and to the return 33, which are all connected together to the rotation. Hence, the satellites 25 directly cause the rotation of the carrier 11 at the rotation velocity of the casing 16. The latter splits the torque between the axle shafts 4, 5 in a known manner.

Clearly, in the condition of figure 4A, the torque is transmitted according to a different gear ratio compared to condition 4B.

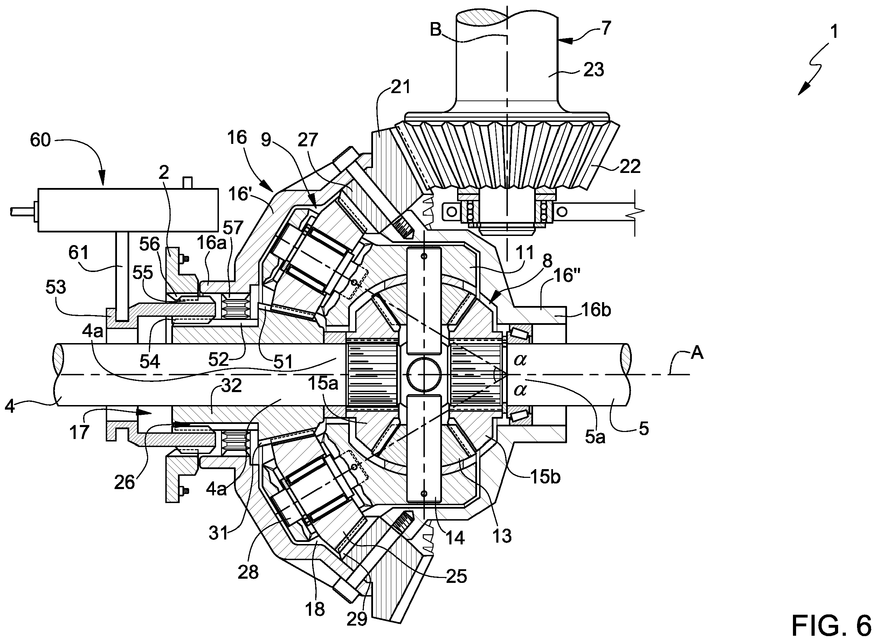

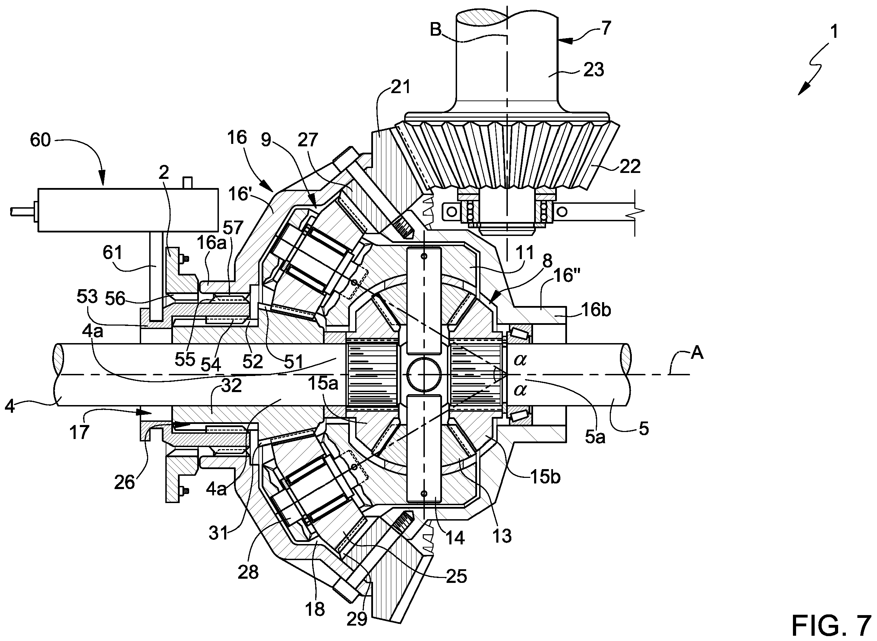

According to the first example embodiment, not according to the present invention shown in figures 6 and 7, the rotating structure 16 is coaxial to the axis A of the axle shafts 4, 5 and defines a first and a second opening 16a, 16b, which are configured to allow the inner ends 4a, 5a of the axle shafts 4, 5 to be inserted inside it.

The rotating structure 16 is operatively connected to the drive source 7 by means of a toothed gear 21, which is rigidly carried by the rotating structure 16 and is configured to cooperate with the drive source 7 so as to allow a torque to be transmitted. In particular, in the embodiment described herein, the toothed gear 21 is a bevel gear configured to mesh with a respective bevel gear 22 carried by a shaft 23 rotating around an axis B, which is perpendicular to the axis A of the axle shafts 4, 5.

Preferably, the rotating structure 16 is manufactured in different portions, in particular a first portion 16' defining the first opening 16a and a second portion 16'' defining the second opening 16b. The two portions 16', 16'' advantageously are rigidly connected to one another, for example through threaded means.

Preferably, the toothed gear 21 is manufactured as a separate piece relative to said portions 16', 16" and is rigidly connected to them. Advantageously, the toothed gear 21 is connected, in a clamped manner, between the two portions 16', 16'' and is fixed to them through the same threaded means connecting them.

The planetary 17 comprises a plurality of satellites 25, which are connected to the carrier 11 of the differential 8, a solar 26, which is housed around one of the axle shafts 4, 5, in the figures the left axle shaft 4, and a crown 27, which is rigidly carried by the rotating structure 16.

In particular, the satellites 25 are free to rotate around a pin 28 rigidly carried by the carrier 11 and, hence, cooperate with a toothing 29 defined by the crown 27 and with a toothing 31 defined by the solar 26. In particular, the pins 28 are arranged in an oblique manner relative to the axes A, B described above, advantageously inclined to define an acute angle α facing the opposite side relative to the differential 8.

The crown 27 is advantageously manufactured as one single piece together with the toothed gear 21, in particular is defined on the opposite side relative to the toothing cooperating with the toothed gear 22.

The solar 26 advantageously comprises a sleeve 32, which is housed around the axle shaft 4 and is free to move in a rotary manner relative to the latter.

The sleeve 32 defines a toothing 51 radially extending from an end portion of the sleeve 32 extending towards the differential 8 and configured to mesh with the satellites 25. Advantageously, given the inclination of the satellites 25, said toothing 51 is a bevel toothing.

The sleeve 32 also defines a further toothing 52 preferably extending on the remaining portion of the sleeve 32.

The differential group 1 further comprises a selector 53, which is configured to selectively connect the sleeve 32 to the casing 2 or to the rotating structure 16. In particular, the selector 53 basically comprises a cylindrical annular element defining an inner toothing 54 facing the sleeve 32 and an outer toothing 55 facing the rotating structure 16.

The inner toothing 54 is configured to constantly mesh with the toothing 52 and slide along the axis A relative to the sleeve 32, whereas the outer toothing 55 is sized so as to selectively mesh with a respective toothing 56, which is rigidly connected to the casing 2, or with a respective toothing 57, which is rigidly connected to the rotating structure 16.

In particular, in the case shown herein, the portion of casing 2 shown is very small, for clarity reasons, whereas the toothing 57 is obtained in the first portion of the rotating structure 16', in particular in the area of the first opening 16a.

Consequently to the embodiment described above, the selector 53 is configured to move along the axis A so as to assume a first configuration (figure 6), in which the toothing 55 meshes with the toothing 56 of the casing 2, thus making the solar 26 integral to the latter. The selector 53 further defines a second configuration (figure 7), in which the toothing 55 meshes with the toothing 56; in this way, the solar 26 becomes integral to the rotating structure 16.

The differential group 1 comprises actuator means 41, which are configured to allow the positioning of the sleeve 32 along the two positions mentioned above to be controlled.

In particular, the actuator means 41 are hydraulic actuator means and comprise a hydraulic cylinder 60, for example a double-acting cylinder, which is configured to move a rod 61, which is connected to the selector 53 and is configured to move it between the aforesaid first and second positions.

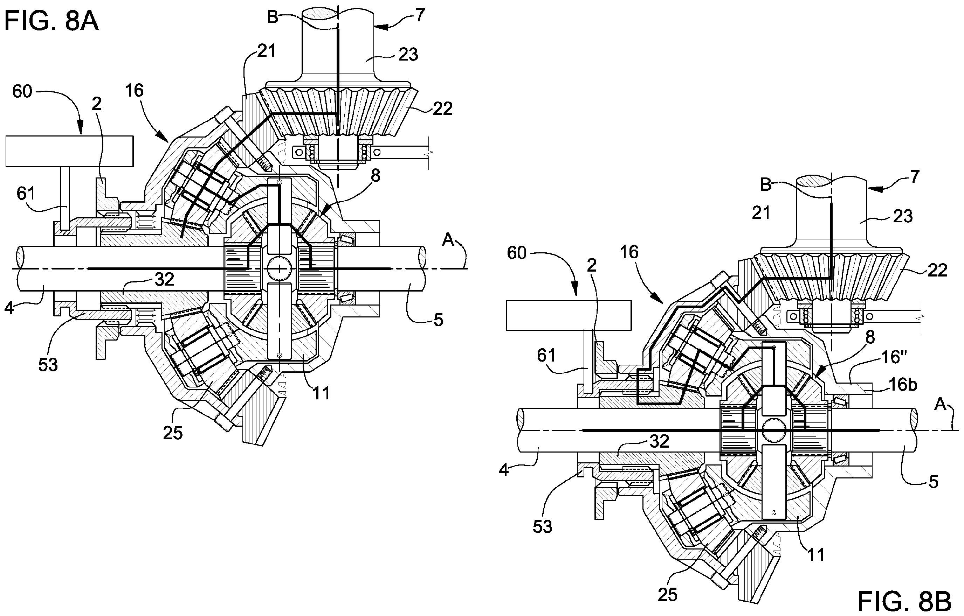

The way in which the embodiment of the differential group 1 described above operates is the following one and it will be described using figures 8A, 8B, which show the lines followed by the torque from the drive source 7 to the differential 8.

In the condition of figure 8A, the actuator means 60 are controlled so as to move the rod 61 in such a way that the selector 53 places itself in the operating condition in which the toothing 55 meshes with the toothing 56, thus causing the sleeve 32 to be coupled to the casing 2. In this condition, the torque coming from the drive source 7 is transmitted from the gearing consisting of the toothed gears 21, 22 to the rotating structure 16 and to the satellites 25. They rotate between the toothing 31 of the sleeve 32, which is fixed to the casing 2 and to the toothing 29 of the crown 27, and transmit said torque to the carrier 11, to which they are rigidly connected. The latter splits the torque between the axle shafts 4, 5 in a known manner.

In the condition of figure 8B, the actuator means 60 are controlled so as to move the rod 61 in such a way that the selector 53 places itself in the operating condition in which the toothing 55 meshes with the toothing 57, thus causing the sleeve 32 to be coupled to the rotating structure 16. In this condition, the torque coming from the drive source 7 is transmitted from the gearing consisting of the toothed gears 21, 22 to the rotating structure 16 and to the satellites 25. They rotate between the toothing 31 of the sleeve 32, which is fixed to the rotating structure 16 and to the toothing 29 of the crown 27, and, hence, transmit said torque from the rotating structure 16 to the carrier 11, to which they are rigidly connected. The latter splits the torque between the axle shafts 4, 5 in a known manner.

Clearly, in the condition of figure 8A, the torque is transmitted according to a different gear ratio compared to condition 8B, in which the torque transmitted to the carrier 11 is equal to the torque delivered to the rotating structure 16.

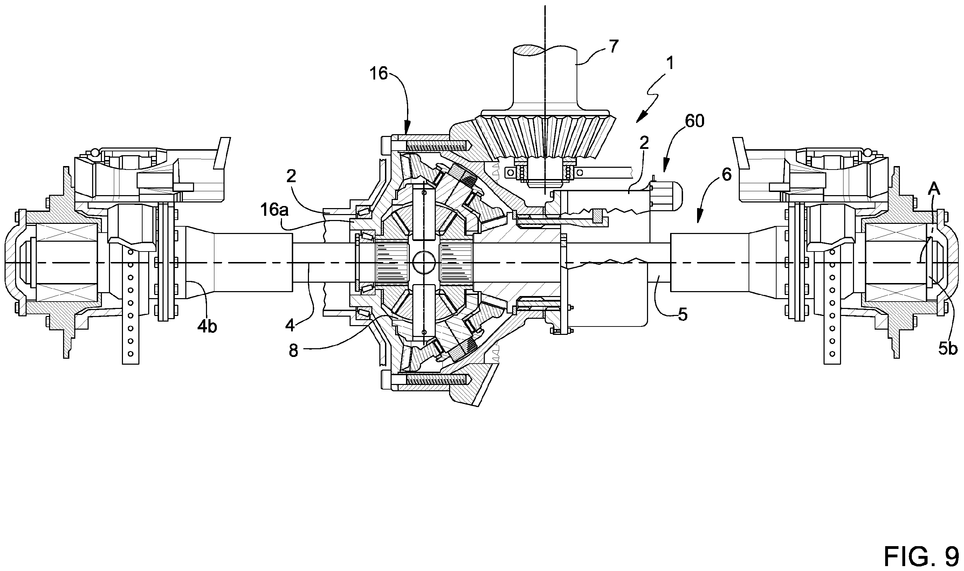

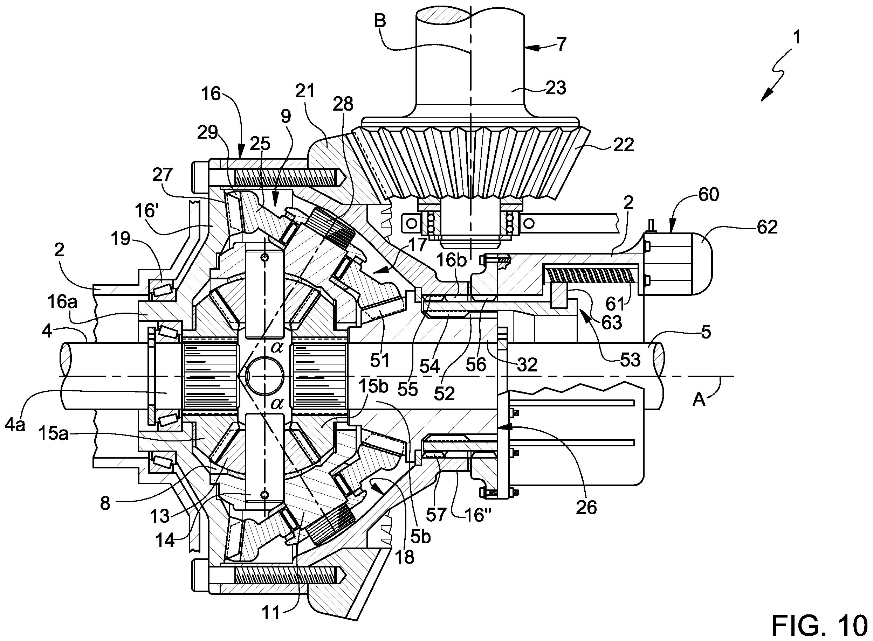

According to the second example embodiment, not according to the present invention shown in figures 9 and 10, the rotating structure 16 is coaxial to the axis A of the axle shafts 4, 5 and defines a first and a second opening 16a, 16b, which are configured to allow the inner ends 4a, 5a of the axle shafts 4, 5 to be inserted inside it.

The rotating structure 16 is operatively connected to the drive source 7 by means of a toothed gear 21, which is rigidly carried by the rotating structure 16 and is configured to cooperate with the drive source 7 so as to allow a torque to be transmitted. In particular, in the embodiment described herein, the toothed gear 21 is a bevel gear configured to mesh with a respective bevel gear 22 carried by a shaft 23 rotating around an axis B, which is perpendicular to the axis A of the axle shafts 4, 5.

Preferably, the rotating structure 16 is manufactured in different portions, in particular a first portion 16' defining the first opening 16a and a second portion 16'' defining the second opening 16b. The two portions 16', 16'' advantageously are rigidly connected to one another, for example through threaded means.

Preferably, the toothed gear 21 is manufactured as a separate piece relative to said portions 16', 16" and is rigidly connected to them. Advantageously, the toothed gear 21 is fixed to the portions 16', 16'' by means of the same threaded means connecting them, in particular is arranged on the outside of them, in particular facing the second portion 16".

The planetary 17 comprises a plurality of satellites 25, which are connected to the carrier 11 of the differential 8, a solar 26, which is housed around one of the axle shafts 4, 5, in the figures the right axle shaft 4, and a crown 27, which is rigidly carried by the rotating structure 16.

In particular, the satellites 25 are free to rotate around a pin 28 rigidly carried by the carrier 11 and, hence, cooperate with a toothing 29 defined by the crown 27 and with a toothing 31 defined by the solar 26. In particular, the pins 28 are arranged in an oblique manner relative to the axes A, B described above, advantageously inclined so as to define an acute angle α, whose origin substantially coincides with the central point of the differential 8, namely the symmetry axis of the cross-shaped support 14. In other words, the intersection of the longitudinal axes of the pin 28 substantially coincides with the intersection of the rotation axes of the satellites 13 of the differential 8.

In particular, according to the embodiment shown herein, the pins 28 are manufactured in an integral manner to the carrier 11.

The crown 27 is advantageously manufactured as one single piece together with one of the portions 16', 16'', in particular with the first portion 16', and basically comprises the toothing 29 axially extending from said portion parallel to the axis A inside the space 18.

The solar 26 advantageously comprises a sleeve 32, which is housed around the axle shaft 5 and is free to move in a rotary manner relative to the latter.

The sleeve 32 defines a toothing 51 radially extending from an end portion of the sleeve 32 extending towards the differential 8 and configured to mesh with the satellites 25. Advantageously, given the inclination of the satellites 25, said toothing 51 is a bevel toothing.

The sleeve 32 also defines a further toothing 52 preferably extending on the remaining portion of the sleeve 32.

The differential group 1 further comprises a selector 53, which is configured to selectively connect the sleeve 32 to the casing 2 or to the rotating structure 16. In particular, the selector 53 basically comprises a cylindrical annular element defining an inner toothing 54 facing the sleeve 32 and an outer toothing 55 facing the rotating structure 16.

The inner toothing 54 is configured to constantly mesh with the toothing 52 and slide along the axis A relative to the sleeve 32, whereas the outer toothing 55 is sized so as to selectively mesh with a respective toothing 56, which is rigidly connected to the casing 2, or with a respective toothing 57, which is rigidly connected to the rotating structure 16.

In particular, in the case shown herein, the portion of casing 2 shown is very small, for clarity reasons, whereas the toothing 57 is obtained in the second portion of the rotating structure 16'', in particular in the area of the second opening 16b.

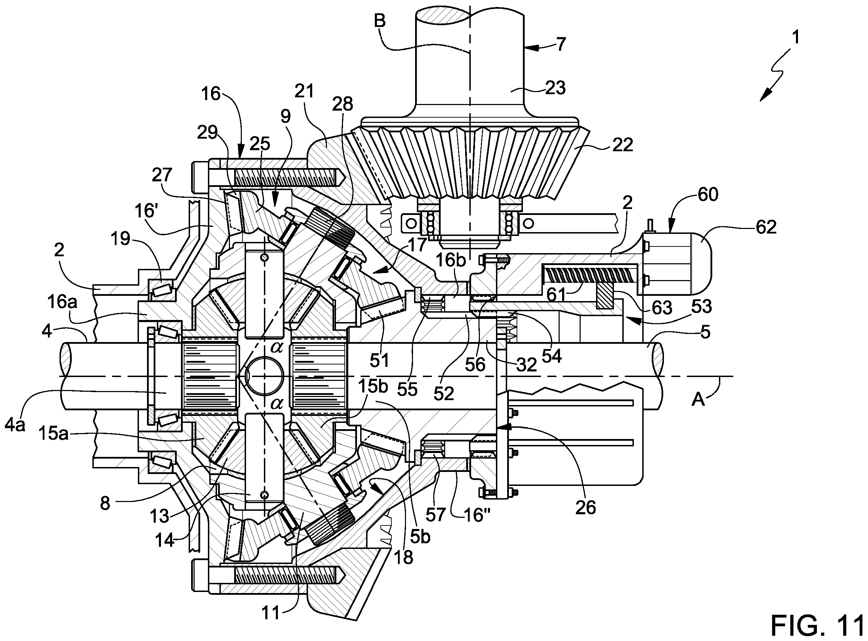

Consequently to the embodiment described above, the selector 53 is configured to move along the axis A so as to assume a first configuration (figure 11), in which the toothing 55 meshes with the toothing 56 of the casing 2, thus making the solar 26 integral to the latter. The selector 53 further defines a second configuration (figure 10), in which the toothing 55 meshes with the toothing 56; in this way, the solar 26 becomes integral to the rotating structure 16.

The differential group 1 comprises actuator means 60, which are configured to allow the positioning of the sleeve 32 along the two positions mentioned above to be controlled.

In particular, the actuator means 60 are electromechanical actuator means and comprise an electric motor 62 configured to operate a worm screw 61 meshing with a threaded ring 63 rigidly carried by the selector 53 and configured to move it along the axis A depending on the rotation of the worm screw 61.

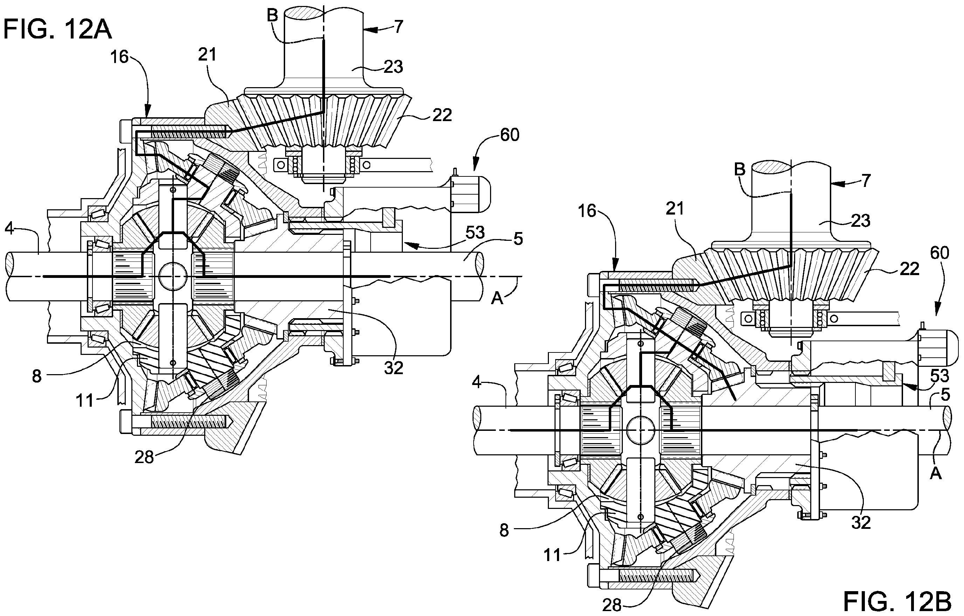

The way in which the embodiment of the differential group 1 described above operates is the following one and it will be described using figures 12A, 12B, which show the lines followed by the torque from the drive source 7 to the differential 8.

In the condition of figure 12A, the actuator means 60 are controlled so as to move the screw 61 in such a way that, by meshing with the ring 62, it moves the selector 53 to the operating condition in which the toothing 55 meshes with the toothing 57, thus causing the sleeve 32 to be coupled to the rotating structure 16. In this condition, the torque coming from the drive source 7 is transmitted from the gearing consisting of the toothed gears 21, 22 to the rotating structure 16 and to the satellites 25. They rotate between the toothing 31 of the sleeve 32, which is fixed to the rotating structure 16 and to the toothing 29 of the crown 27, and, hence, transmit said torque from the rotating structure 16 to the carrier 11, to which they are rigidly connected. The latter splits the torque between the axle shafts 4, 5 in a known manner.

In the condition of figure 12B, the actuator means 60 are controlled so as to move the screw 61 in such a way that, by meshing with the ring 62, it moves the selector 53 to the operating condition in which the toothing 55 meshes with the toothing 56, thus causing the sleeve 32 to be coupled to the casing 2. In this condition, the torque coming from the drive source 7 is transmitted from the gearing consisting of the toothed gears 21, 22 to the rotating structure 16 and to the satellites 25. They rotate between the toothing 31 of the sleeve 32, which is fixed to the casing 2 and to the toothing 29 of the crown 27, and transmit said torque to the carrier 11, to which they are rigidly connected. The latter splits the torque between the axle shafts 4, 5 in a known manner. Clearly, in the condition of figure 8A, the torque is transmitted according to a different gear ratio compared to condition 8B, in which the torque transmitted to the carrier 11 is equal to the torque delivered to the rotating structure 16.

In all embodiments described above, the differential group 1 further comprises several functional elements, such as anti-dust rings, spacers, o-rings, threaded elements, splines or bearings configured to allow a correct assembly and operation of the structure schematically disclosed above, which are not discussed in the detail for the sake of brevity.

Furthermore, known differential locking means can be provided, which are not shown herein.

Owing to the above, the advantages of a differential group 1 according to the invention are evident.

In particular, the differential group 1 allows for two possible gear ratios between the drive source 7 and the differential 8, thus increasing the versatility of the driving system of the heavy vehicle. In this way, it is possible to provide a versatile differential group for different types of driving styles and loads of the vehicle.

Furthermore, the differential group 1 is particularly compact thanks to the specific arrangement of the elements that are part of the rotating structure 16 and of the planetary 17. In particular, all the main gears of the differential group 1 are isolated from the outside, since they are wrapped inside the casing 2 and the rotating structure 16.

In this way, contaminations from the outside can be avoided, thus increasing the useful life of the differential group.

The specific arrangement of the axes of the pins 28 and the fact that the crown is obtained on the inside of the rotating structure 16 allow for an extremely compact planetary.

Finally, the differential group 1 according to the invention can be subjected to changes and variants, which, though, do not go beyond the scope of protection set forth in the appended claim 1.

For example, it is clear that the actuator means 41, 60, 70 can be different and be used in an equivalent manner as well as in combination in any one of the embodiments described above.

Furthermore, the pairs of toothed gears described above can be of any type and dimension. Furthermore, the position of the toothed gear 21, the existence of the selector 53 or the direct actuation of the sleeve 32 by the actuator means can be changed by combining the different embodiments described herein.

Similarly, the shape of the structure 2 or of the axle 6 can change depending on the type of vehicle, just like the elements of the differential 8.

## Claims

1. Differential group (1) for a heavy vehicle, said differential group (1) comprising a casing (2) defining a space (3), a differential (8) and a transmission (9) housed inside said space (3),
said differential (8) being configured to divide an input torque from a drive source (7) to said differential group (1) to a torque of axle shafts (4, 5) of said vehicle coaxial around an axis (A),
said transmission (9) being operatively interposed between said driving source (7) and said differential (8) and comprising a rotating structure (16) carried rotationally free from said casing (2) and a planetary (17),
said rotating structure (16) being operatively interposed between said driving source (7) and said planetary (17) and defining a space (18) housing said planetary (17) and said differential (8),
said planetary (17) comprising:
a solar (26) rotationally carried around one of the axle shafts (4, 5) and defining a toothing (31),
a crown (27) rigidly carried by said rotating structure (16) and defining a toothing (29), and
a plurality of satellites (25) meshing with said toothing (29, 31) of said solar (26) and said crown (27) and configured to rotate around a pin (28) rigidly carried by a carrier (11) of said differential,
said differential group (1) comprising actuator means (41, 60, 70) configured to control said solar (26) so that it assumes a first operating condition in which it is rotationally coupled to said rotating structure (16) or a second operating condition in the which is rotationally coupled to said casing (2), **characterized in that** said solar(26) comprises a sleeve (32) operated by said actuator means (41) to move along said axis (A) and positioned around one of the axle shafts (4, 5),
said sleeve (32) also defining a first toothing (35) and a second toothing (37) configured respectively to mesh alternately with respective teeth (39, 38) carried by each pin (28) of said satellites (25) and by said carcass (2) as a function of the position of said sleeve on said axis (A).

2. Differential group according to claim 1, wherein said solar (26) comprises a return (33) defining said toothing (31) and rotationally coupled to said sleeve (32) by means of a grooved coupling made between a toothing (36) carried by said return (33) and said first toothing (35) of said sleeve (32), said first toothing (35) meshing simultaneously with said pin (28) and said toothing (36) of said return according to the position of said sleeve on said axis (A).

3. Differential group according to claim 1, wherein said solar (26) comprises a sleeve (32) defining said toothing 29) and housed around one of the axle shafts (4, 5)
and a selector (53) operated by said actuator means (41) to move along said A and positioned around said sleeve (32) and rotationally coupled thereto,
said selector (53) also defining a toothing (55) configured to alternately mesh with respective toothings (56, 57) carried by said casing (2) and by said rotating structure (56) thus making said sleeve (32) alternately integral with them.

4. Differential group according to one of the preceding claims, wherein said rotating structure (16) defines a toothing (21) configured to cooperate with said driving source (7) to transfer said torque to said rotating structure (16).

5. Differential group according to claim 4, wherein said rotating structure (16) is made in two portions (16 ', 16' '), said toothing (21) being made on a separate element and clamped between said two portions (16', 16").

6. Differential group according to claim 4, wherein said rotating structure (16) is made in two portions (16', 16"), said toothing (21) being made on a separate element fixed to one of said portions (16').

7. Differential unit according to one of the preceding claims, wherein said crown (27) is made in one piece to said rotating structure (16).

8. Differential group according to one of claims 4 to 7, wherein said crown (27) is made in one piece with said toothing (21).

9. Differential group according to one of the preceding claims, wherein a longitudinal axis of said pin (28) of said satellites (25) is positioned obliquely with respect to said axis (A).

10. Differential group according to claim 9, in which the intersection of the longitudinal axes of said pins (28) coincides with the intersection of the rotation axes of said satellites (13) of said differential (8).

11. The differential assembly of claim 9, wherein said pins (28) are integrally made to said tractor carrier (11).

12. Differential unit according to one of the preceding claims wherein said actuator means (41, 60, 70) comprise at least one of a pneumatic, hydraulic, mechanical actuator.

13. Vehicle axle (6) comprises a first and a second axle shaft (4, 5) and a differential unit (1) configured to connect said axle shafts (4, 5) to a driving source (7) of said vehicle, said differential assembly (1) being made according to one of the preceding claims.

## Patentansprüche

1. Differentialgruppe (1) für ein Schwerlastfahrzeug, welche Differentialgruppe (1) ein Gehäuse (2), welches einen Raum (3) begrenzt, ein Differential (8) und ein Getriebe (9), das in dem Raum (3) aufgenommen ist, umfasst,
welches Differential (8) dazu ausgebildet ist, ein Eingangsdrehmoment, das von einer Antriebsquelle (7) auf die Differentialgruppe (1) übertragen wird, in ein Drehmoment von Achswellen (4, 5) des Fahrzeugs aufzuteilen, welche koaxial um eine Achse (A) stehen,
wobei das Getriebe (9) operativ zwischen der Antriebsquelle (7) und dem Differential angeordnet ist und eine rotierende Struktur (16) umfasst, die frei drehend von dem Gehäuse (2) und einem Planetengetriebe (17) getragen wird,
wobei die rotierende Struktur (16) operativ zwischen der Antriebquelle (7) und dem Planetengetriebe (17) angeordnet ist und einen Raum (18) begrenzt, der das Planetengetriebe (17) und das Differential (8) aufnimmt,
wobei das Planetengetriebe (17) umfasst:
ein Sonnenrad (26), das drehbar um eine der Achswellen (4, 5) herum angeordnet ist und eine Zahnung (31) festlegt,
ein Kronrad (27), das starr durch die rotierende Struktur (16) getragen wird und eine Zahnung (29) festlegt, und
eine Mehrzahl von Satellitenrädern (27), die die Zahnung (29, 31) des Sonnenrads (26) und des Kronrads (27) kämmen und dazu ausgebildet sind, um einen Stift (28) zu rotieren, der starr durch einen Träger (11) des Differentials getragen wird,
wobei die Differentialgruppe (1) Betätigungsmittel (41, 60, 70) umfasst, dazu ausgebildet, das Sonnenrad (26) derart zu steuern, dass es einen ersten Betriebszustand einnimmt, in welchem es rotierend mit der rotierenden Struktur (16) gekoppelt ist, oder einen zweiten Betriebszustand, in welchem es rotierend mit dem Gehäuse (2) gekoppelt ist, **dadurch gekennzeichnet, dass** das Sonnenrad (26) eine Hülse (32) umfasst, die durch die Betätigungsmittel (41) zur Bewegung entlang der Achse (A) betätigt wird und um eine der Achswellen (4, 5) herum angeordnet ist,
welche Hülse (32) ferner eine erste Zahnung (35) und eine zweite Zahnung (37) festlegt, die jeweils dazu ausgebildet sind, wahlweise die jeweiligen Zähne (39, 38), die von jedem Stift (28) der Satellitenräder (25) und vom Käfig (2) getragen werden, als Funktion der Position der Hülse auf der Achse (A) zu kämmen.

2. Differentialgruppe gemäß Anspruch 1, bei welcher das Sonnenrad (26) eine Rückkehreinrichtung (33) umfasst, die die Zahnung (31) festlegt und drehbar mit der Hülse (32) durch eine Nutkupplung gekoppelt ist, die zwischen einer von der Rückkehreinrichtung (33) getragenen Zahnung (36) und der ersten Zahnung (35) der Hülse (32) vorgesehen ist, wobei die erste Zahnung (35) gleichzeitig den Stift (28) und die Zahnung (36) der Rückkehreinrichtung entsprechend der Position der Hülse auf der Achse (A) kämmt.

3. Differentialgruppe gemäß Anspruch 1, bei welcher das Sonnenrad (26) eine Hülse (32) umfasst, die die Zahnung (29) festlegt und um eine der Achswellen (4, 5) herum untergebracht ist,
sowie eine Auswahleinrichtung (53), die durch die Betätigungsmittel (41) zur Bewegung entlang der Achse (A) betätigt wird und um die Hülse (32) angeordnet und drehbar mit dieser gekoppelt ist,
welche Auswahleinrichtung (53) ferner eine Zahnung (55) festlegt, die dazu ausgebildet ist, wahlweise mit den jeweiligen Zahnungen (56, 57) zu kämmen, die durch das Gehäuse (2) und durch die rotierende Struktur (56) getragen werden, derart, dass die Hülse (32) wahlweise eine Einheit mit diesen bildet.

4. Differentialgruppe gemäß einem der vorhergehenden Ansprüche, bei welcher die rotierende Struktur (16) eine Zahnung (21) festlegt, dazu ausgebildet, mit der Antriebsquelle (7) zur Übertragung des Drehmoments auf die rotierende Struktur (16) zusammenzuwirken.

5. Differentialgruppe gemäß Anspruch 4, bei welcher die rotierende Struktur (16) in zwei Teile (16', 16") ausgebildet ist, wobei die Zahnung (21) auf einem getrennten Element ausgebildet ist und zwischen den zwei Teilen (16', 16") eingeklemmt ist.

6. Differentialgruppe gemäß Anspruch 4, bei welcher die rotierende Struktur (16) in zwei Teile (16', 16") ausgebildet ist, und die Zahnung (21) auf einem getrennten Element ausgebildet ist, das an einem der Teile (16') befestigt ist.

7. Differentialeinheit gemäß einem der vorhergehenden Ansprüche, bei welcher das Kronrad (27) einstückig mit der rotierenden Struktur (16) ausgebildet ist.

8. Differentialgruppe gemäß einem der Ansprüche 4 bis 7, bei welcher das Kronrad (27) einstückig mit der Zahnung (21) ausgebildet ist.

9. Differentialgruppe gemäß einem der vorhergehenden Ansprüche, bei welcher eine Längsachse des Stiftes (28) der Satellitenräder (25) schräg zur Achse (A) angeordnet ist.

10. Differentialgruppe gemäß Anspruch 9, bei welcher der Schnitt der Längsachsen der Stifte (28) mit dem Schnitt der Drehachsen der Satellitenräder (13) des Differentials (8) zusammenfällt.

11. Differentialanordnung gemäß Anspruch 9, bei welcher die Stifte (28) einteilig mit dem Zugträger (11) ausgebildet sind.

12. Differentialeinheit gemäß einem der vorhergehenden Ansprüche, bei welcher die Betätigungsmittel (41, 60, 70) zumindest eines der folgenden umfassen: ein pneumatisches Betätigungsmittel, ein hydraulisches Betätigungsmittel, ein mechanisches Betätigungsmittel.

13. Fahrzeugachse (6), umfassend eine erste und eine zweite Achswelle (4, 5) und eine Differentialeinheit (1), dazu ausgebildet, die Achswellen (4, 5) mit einer Antriebsquelle (7) des Fahrzeugs zu verbinden, wobei die Differentialanordnung (1) gemäß einem der vorhergehenden Ansprüche ausgebildet ist.

## Revendications

1. Groupe différentiel (1) pour un véhicule lourd, ledit groupe différentiel (1) comprenant un carter (2) définissant un espace (3), un différentiel (8) et une transmission (9) logés à l'intérieur dudit espace (3),
ledit différentiel (8) étant configuré pour diviser un couple d'entrée provenant d'une source d'entraînement (7) vers ledit groupe différentiel (1) en un couple d'arbres d'essieu (4, 5) dudit véhicule coaxiaux autour d'un axe (A),
ladite transmission (9) étant fonctionnellement interposée entre ladite source d'entraînement (7) et ledit différentiel (8) et comprenant une structure rotative (16) portée en rotation libre par rapport audit carter (2) et un planétaire (17),
ladite structure rotative (16) étant fonctionnellement interposée entre ladite source d'entraînement (7) et ledit planétaire (17) et définissant un espace (18) logeant ledit planétaire (17) et le différentiel (8),
ledit planétaire (17) comprenant :
un solaire (26) porté en rotation autour de l'un des arbres d'essieu (4, 5) et définissant une denture (31),
une couronne (27) portée de manière rigide par ladite structure rotative (16) et définissant une denture (29), et
une pluralité de satellites (25) s'engrenant avec ladite denture (29, 31) dudit solaire (26) et de ladite couronne (27) et configurés pour être en rotation autour d'une broche (28) portée de manière rigide par un support (11) dudit différentiel,
ledit groupe différentiel (1) comprenant des moyens actionneurs (41, 60, 70) configurés pour commander ledit solaire (26) de sorte qu'il adopte un premier état de fonctionnement dans lequel il est couplé en rotation à ladite structure rotative (16) ou un second état de fonctionnement dans lequel il est couplé en rotation audit carter (2), **caractérisé en ce que** ledit solaire (26) comprend un manchon (32) mis en fonctionnement par lesdits moyens actionneurs (41) afin qu'il se déplace le long dudit axe (A) et positionné autour de l'un des arbres d'essieu (4, 5),
ledit manchon (32) définissant également une première denture (35) et une seconde denture (37) configurées respectivement pour s'engrener alternativement avec des dents (39, 38) respectives portées par chaque broche (28) desdits satellites (25) et par ladite carcasse (2) en fonction de la position dudit manchon sur ledit axe (A).

2. Groupe différentiel selon la revendication 1, dans lequel ledit solaire (26) comprend un retour (33) définissant ladite denture (31) et couplé en rotation audit manchon (32) au moyen d'un accouplement rainuré réalisé entre une denture (36) portée par ledit retour (33) et ladite première denture (35) dudit manchon (32), ladite première denture (35) s'engrenant simultanément avec ladite broche (28) et ladite denture (36) dudit retour selon la position dudit manchon sur ledit axe (A) .

3. Groupe différentiel selon la revendication 1, dans lequel ledit solaire (26) comprend un manchon (32) définissant ladite denture (29) et logé autour de l'un des arbres d'essieu (4, 5)
et un sélecteur (53) mis en fonctionnement par lesdits moyens actionneurs (41) afin qu'il se déplace le long dudit A et positionné autour dudit manchon (32) et couplé en rotation à celui-ci,
ledit sélecteur (53) définissant également une denture (55) configurée pour s'engrener alternativement avec des dentures (56, 57) respectives portées par ledit carter (2) et par ladite structure rotative (56), ce qui rend ledit manchon (32) alternativement solidaire de celles-ci.

4. Groupe différentiel selon l'une des revendications précédentes, dans lequel ladite structure rotative (16) définit une denture (21) configurée pour coopérer avec ladite source d'entraînement (7) pour transférer ledit couple à ladite structure rotative (16).

5. Groupe différentiel selon la revendication 4, dans lequel ladite structure rotative (16) est réalisée en deux parties (16', 16''), ladite denture (21) étant réalisée sur un élément séparé et serré entre lesdites deux parties (16', 16'').

6. Groupe différentiel selon la revendication 4, dans lequel ladite structure rotative (16) est réalisée en deux parties (16', 16''), ladite denture (21) étant réalisée sur un élément séparé fixé à l'une desdites parties (16').

7. Unité différentiel selon l'une des revendications précédentes, dans laquelle ladite couronne (27) est réalisée d'un seul tenant avec ladite structure rotative (16).

8. Groupe différentiel selon l'une des revendications 4 à 7, dans lequel ladite couronne (27) est réalisée d'un seul tenant avec ladite denture (21).

9. Groupe différentiel selon l'une des revendications précédentes, dans lequel un axe longitudinal de ladite broche (28) desdits satellites (25) est positionné de manière oblique par rapport audit axe (A).

10. Groupe différentiel selon la revendication 9, dans lequel l'intersection des axes longitudinaux desdites broches (28) coïncide avec l'intersection des axes de rotation desdits satellites (13) dudit différentiel (8).

11. Ensemble différentiel selon la revendication 9, dans lequel lesdites broches (28) sont réalisées de manière solidaire audit support (11) tracteur.

12. Unité différentiel selon l'une des revendications précédentes dans laquelle lesdits moyens actionneurs (41, 60, 70) comprennent au moins l'un parmi un actionneur pneumatique, hydraulique ou mécanique.

13. Essieu de véhicule (6) qui comprend un premier et un second arbre d'essieu (4, 5) et une unité différentiel (1) configurée pour relier lesdits arbres d'essieu (4, 5) à une source d'entraînement (7) dudit véhicule, ledit ensemble différentiel (1) étant réalisé selon l'une des revendications précédentes.
